**Europäisches Patentamt**

**European Patent Office**

**Office européen des brevets**

(11) Veröffentlichungsnummer: **0 213 459**
**A2**

(12) **EUROPÄISCHE PATENTANMELDUNG**

(21) Anmeldenummer: **86111032.8**

(22) Anmeldetag: **09.08.86**

(51) Int. Cl.⁴: **H 04 M 1/72**

(30) Priorität: **04.09.85 DE 3531557**

(43) Veröffentlichungstag der Anmeldung:
**11.03.87 Patentblatt 87/11**

(84) Benannte Vertragsstaaten:
**AT BE FR IT LU NL SE**

(71) Anmelder: **Telefonbau und Normalzeit GmbH**
**Mainzer Landstrasse 128-146 Postfach 4432**
**D-6000 Frankfurt (Main)(DE)**

(72) Erfinder: **Moses, Klaus**
**Talstrasse 10g**
**D-6000 Frankfurt 56(DE)**

(72) Erfinder: **Lange, Heinz**
**Buchenstrasse 6**
**D-6230 Frankfurt 80(DE)**

(74) Vertreter: **Portwich, Peter**
**Telefonbau und Normalzeit GmbH Patentabteilung**
**Mainzer Landstrasse 128-146**
**D-6000 Frankfurt/Main(DE)**

(54) **Schaltungsanordnung für eine Fernsprechteilnehmerstation.**

(57) In einer Fernsprechteilnehmerstation mit einer Speisung von Einrichtungen und Zusatzeinrichtungen aus dem Schleifenstrom der Teilnehmeranschlußleitung ist ein aus einem Schleifenstromsensor und einem mit diesem in Reihe geschalteten Shunt-Regler gebildetes Querglied zwischen die Sprechadern geschaltet. Das Gleichstromausgangssignal des Schleifenstromsensors wird der vom Querglied gespeisten Steuereinrichtung zugeführt und dort ausgewertet. Bei einer Schleifenstromänderung veranlaßt die Steuereinrichtung die Öffnung eines parallel zum Gabelumschaltkontakt liegendes Schaltmittel, welches durch ein vorangegangenes Tastensignal geschlossen wurd. Mit einer derartigen Schaltungsanordnung ist es möglich, ein Verbindung von einer von mehreren, parallel an eine Teilnehmeranschlußleitung angeschlossenen Fernsprechteilnehmerstationen an eine dieser Fernsprechteilnehmerstationen weiter zu geben, ohne daß bei der übernehmenden Fernsprechteilnehmerstation der Handapparat bereits abgehoben ist, bevor der Handapparat bei der übergebenden Fernsprechteilnehmerstation aufgelegt worden ist.

EP 0 213 459 A2

Telefonbau und Normalzeit GmbH, 6000 Frankfurt am Main,
Mainzer Landstrasse 128 - 146

## Schaltungsanordnung für eine Fernsprechteilnehmerstation

Die Erfindung betrifft eine Schaltungsanordnung für eine
Fernsprechteilnehmerstation mit einer Speisung von Einrichtungen und Zusatzeinrichtungen aus dem Schleifenstrom
der Teilnehmeranschlußleitung, wobei ein aus einem Schleifenstromsensor und einem mit diesem in Reihe geschalteten
Shunt-Regler gebildetes Querglied zwischen die Sprechadern
geschaltet ist, das Gleichstromausgangssignal des Schleifenstromsensors dem Shunt-Regler zugeführt wird und das
Wechselstromsignal des Mikrofons bzw. des MFV-Senders
dem Gleichstrom-Ausgangssignal des Schleifenstromsensors
überlagert wird, so daß durch den Shunt-Regler eine
Modulation des durch diesen fließenden Gleichstroms erfolgt
und eine Aufteilung des durch das Querglied fließenden
Schleifenstroms durch eine diesem zugeordnete Stromverteilungsschaltung entsprechend den Prioritätsklassen der
Zusatzeinrichtungen erfolgt, wobei die Fernsprechteilnehmerstation eine aus dem Querglied gespeiste Steuereinrichtung und einen Gabelumschalter aufweist (nach Patent
P 34 29 330.2-31).

Eine derartige Schaltungsanordnung ist bereits bekannt.
Die Aufgabe der vorliegenden Erfindung besteht darin, eine
Schaltungsanordnung anzugeben, welche die Gesprächsübernahme
von einem von zwei oder mehreren parallel an eine Teilnehmeranschlußleitung angeschalteten Fernsprechteilnehmerstationen
ermöglicht, ohne daß sich dabei die übernehmende Fernsprechteilnehmerstation bereits im Aushängezustand befindet, wenn
der Handapparat bei der übergebenden Fernsprechteilnehmer-

station aufgelegt wird.

Diese Aufgabe wird dadurch gelöst, daß das Ausgangssignal des Schleifenstromsensors zusätzlich der Steuereinrichtung zugeführt und dort ausgewertet wird und daß bei einer Schleifenstromänderung die Steuereinrichtung die Öffnung eines parallel zum Gabelumschaltkontakt liegenden Schaltmittels veranlaßt wird, welches durch ein vorangegangenes Tastsignal geschlossen wurde.

Der Ausgang des Schleifenstromsensors ist zu diesem Zweck nur mit einem entsprechenden Eingang der Steuereinrichtung zu verbinden. Durch die Auswertung der Lage des Gabelumschaltkontakts und eines Kontakts einer zusätzlichen Taste ist die Steuereinrichtung ohne weiteres in der Lage, das parallel zum Gabelumschaltkontakt liegende Schaltmittel zu steuern. An der übergebenden Fernsprechteilnehmerstation wird vor Auflegen des Handapparates die betreffende Taste betätigt, worauf die Verbindung über das Schaltmittel weiter gehalten bleibt. Sobald bei der übernehmenden Fernsprechteilnehmerstation der Handapparat abgehoben wird, wird die Schleifenstromänderung von der Steuereinrichtung der übergebenden Fernsprechteilnehmerstation ausgewertet und das Schaltmittel geöffnet.

Weitere Vorteile ergeben sich aus den Unteransprüchen.

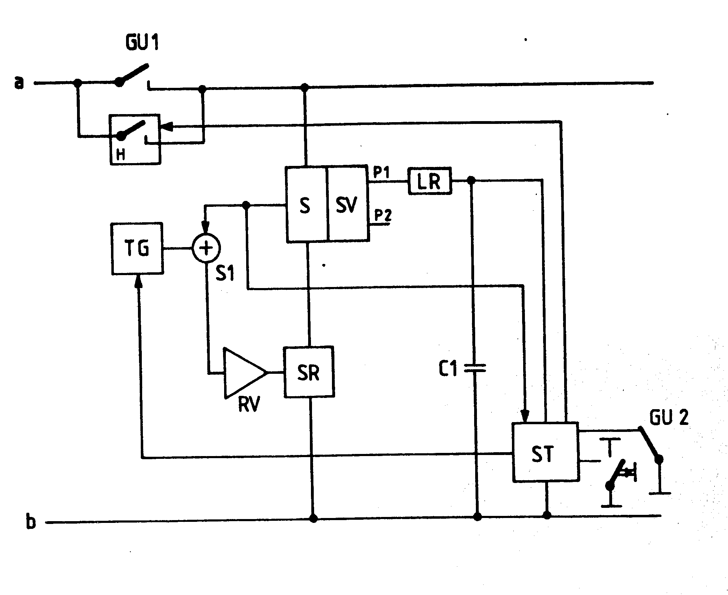

Die Erfindung wird anhand eines Ausführungsbeispiels näher erläutert, welches in der Zeichnung dargestellt ist.

In dem in der Zeichnung dargestellten Blockschaltbild sind nur diejenigen Einrichtungen einer Fernsprechteilnehmerstation gezeigt, welche zum Verständnis der Erfindung unbedingt notwendig sind. Bezüglich weiterer Einrichtungen wird auf die Patentanmeldung P 34 29 330.2 verwiesen.

Zwischen die Sprechadern a/b ist ein Querglied gebildet durch eine Reihenschaltung eines Schleifenstromsensors S und eines Shunt-Reglers SR geschaltet. Der Schleifenstromsensor S liefert ein dem durch das Querglied fließenden Gleichstrom entsprechendes Signal an einen Summenpunkt S1, welchem das Tonsignal des Tongenerators TG zugeführt wird. Zusätzlich am Summenpunkt ist auch der nicht gezeigte Sprechverstärker des Mikrofons angeschlossen. Am Summenpunkt S1 ist ein Regelverstärker RV angeschlossen, welcher den Shunt-Regler steuert. Diese Steuerung erfolgt einmal gleichstrommäßig durch das vom Schleifenstromsensor S gelieferte Signal und außerdem wechselstrommäßig entweder durch das Mikrofonsignal oder das Tonsignal aus dem Tongenerator TG.

Am Schleifenstromsensor S ist eine Stromverteilungsschaltung SV angeschlossen, welche zwei Ausgänge P1 und P2 aufweist. Am Anschluß P1 ist beispielsweise eine Steuereinrichtung ST angeschlossen, die beispielsweise als Mikroprozessor ausgebildet sein kann. Sie dient zur Erfassung der Zustände der Bedienelemente der Fernsprechteilnehmerstationen, zur Erzeugung von Anzeigeinformationen und zur Aussendung der Wahlinformationen, sie wird nicht nur während des Wahlvorgangs sondern für die Dauer der Benutzung der Fernsprechteilnehmerstation benötigt. Sie weist u.a. eine Abtasteinrichtung zur Erfassung der Schaltzustände von Tasten, von denen eine Taste T gezeigt ist, und des Gabelumschaltkontakts GU auf. Die Steuereinrichtung ST benötigt eine konstante Betriebsspannung, welche durch den Spannungsregler LR aus der von der Stromverteilungsschaltung SV angebotenen ungeregelten Spannung konstant gehalten wird. Der Kondensator C1, welcher parallel zur Versorgungsspannung geschaltet ist, dient als Stützkondensator, auf diese Weise wird während der Schleifenunterbrechung bei Impulswahl und bei Gesprächsende die Steuereinrichtung ST noch für eine bestimmte Zeit mit Energie versorgt. Der Ausgang des Schleifenstromsensors S ist mit einem entsprechenden Eingang der Steuereinrichtung ST verbunden. Diese überwacht das Ausgangssignal des Schleifenstromsensors S und wertet eine von dem Schleifenstromsensor erkannte Schleifenstromänderung aus. Parallel zum Gabelumschaltkontakt GU1 ist ein Schaltmittel H geschaltet, welches auf Veranlassung der Steuereinrichtung ST geöffnet oder geschlossen werden kann. Außerdem kann die Steuereinrichtung ST die Ein- bzw. Ausschaltung des Tongenerators TG veranlassen.

Es wird nun davon ausgegangen, daß zwei oder mehrere Fernsprechteilnehmerstationen parallel an einer gemeinsamen Teilnehmeranschlußleitung angeschlossen sind. Es wird weiter davon ausgegangen, daß sich eine Fernsprechteilnehmerstation im Gesprächszustand befindet und die bestehende Verbindung an eine andere, parallel geschaltete Fernsprechteilnehmerstation weitergegeben werden soll. Hierzu ist zunächst an der übergebenden Fernsprechteilnehmerstation eine besondere Taste T zu betätigen. Das von der Taste T erzeugte Signal wird von der Steuereinrichtung ST ausgewertet und aufgrund des Signals das Schließen des Schaltmittels H veranlaßt. Das Auflegen des Handapparates hat das Öffnen des Gabelumschaltkontakts GU1 und das Schließen des Gabelumschaltkontakts GU2 zur Folge. Das Signal des Gabelumschaltkontakts GU2 wird von der Steuereinrichtung ST ausgewertet und dient zur Anschaltung des Tongenerators TG. Auf diese Weise erhält der ferne Teilnehmer einen Hörton, mit welchem er auf die Gesprächübergabe aufmerksam gemacht wird, damit dieser nicht die Gesprächsverbindung beendet. Sobald an der die Verbindung übernehmenden Fernsprechteilnehmerstation der Handapparat abgenommen wird, erfolgt eine Schleifenstromänderung auf der Teilnehmeranschlußleitung, die von dem Schleifenstromsensor S erkannt und an die Steuereinrichtung ST gemeldet wird, die daraufhin die Öffnung des Schaltmittels H und die Abschaltung des Tongenerators TG veranlaßt.

Mit dem Signal vom Gabelumschaltkontakt GU2 wurde in der Steuereinrichtung ST eine Zeitüberwachung gestartet. Erfolgt innerhalb einer vorgegebenen Zeit keine Schleifenstromänderung, so wird nach Ablauf dieser Zeit durch die Steuereinrichtung ST die Öffnung des Schaltmittels H und die Abschaltung des Tongenerators TG veranlaßt.

P 3980
Fs/we
5.8.85

Telefonbau und Normalzeit GmbH, 6000 Frankfurt am Main,
Mainzer Landstrasse 128 - 146

0213459

## Schaltungsanordnung für eine Fernsprechteilnehmerstation

P a t e n t a n s p r ü c h e

1. Schaltungsanordnung für eine Fernsprechteilnehmerstation
mit einer Speisung von Einrichtungen und Zusatzeinrichtungen aus dem Schleifenstrom der Teilnehmeranschlußleitung, wobei ein aus einem Schleifenstromsensor
und einem mit diesem in Reihe geschalteten Shunt-Regler
gebildetes Querglied zwischen die Sprechadern geschaltet
ist, daß Gleichstromausgangssignal des Gleichstromsensors
dem Shunt-Regler zugeführt wird und das Wechselstromsignal des Mikrofon bzw. des MFV-Senders dem Gleichstrom-
Ausgangssignal des Schleifenstromsensors überlagert wird,
so daß durch den Shunt-Regler eine Modulation des durch
diesen fließenden Gleichstroms erfolgt und eine Aufteilung
des durch das Querglied fließenden Schleifenstroms durch
eine diesem zugeordnete Stromverteilungsschaltung entsprechend den Prioritäten der Zusatzeinrichtungen erfolgt,
wobei die Fernsprechteilnehmerstation eine aus dem Querglied gespeiste Steuereinrichtung und einem Gabelumschalter aufweist, nach Patent ( P 34 29 330.2)
dadurch gekennzeichnet,
daß das Ausgangssignal des Schleifenstromsensors (S)
zusätzlich der Steuereinrichtung (ST) zugeführt und dort
ausgewertet wird und daß bei einer Schleifenstromänderung
die Steuereinrichtung (ST) die Öffnung eines parallel zum
Gabelumschaltkontakt (GU1) liegendes Schaltmittels (H)
veranlaßt wird, welches durch ein vorangegangenes Tastensignal geschlossen wurde.

0213459

2. Schaltungsanordnung nach Anspruch 1,
dadurch gekennzeichnet,
daß nach Ablauf einer vorgegebenen Zeit bei Ausbleiben
der Schleifenstromänderung die Öffnung des Schaltmittels
(H) durch die Steuereinrichtung (ST) veranlaßt wird.

3. Schaltungsanordnung nach einem der Ansprüche 1 oder 2,
dadurch gekennzeichnet,
daß mit Beginn der Öffnung des Gabelumschaltkontakts (GU1)
ein Hörton aus einem Hörtongenerator (TG) dem Gleichstrom-
Ausgangssignal des Schleifenstromsensors (S) überlagert
wird und daß der Hörton bei einer Schleifenstromänderung
oder nach Ablauf der vorgegebenen Zeit auf Veranlassung
der Steuereinrichtung (ST) abgeschaltet wird.

P 3980
Fs/we
5.8.85